# EUROPÄISCHE PATENTANMELDUNG

(11) **EP 3 772 483 A1**
(43) Veröffentlichungstag der Anmeldung: **10.02.2021**
(21) Anmeldenummer: 20188173.7
(22) Anmeldetag: 28.07.2020
(51) Int. Cl.: B66F 9/075, B66F 17/00, G01S 13/931

(54) **VERFAHREN ZUR ERMITTLUNG DER EIGENBEWEGUNG EINES FLURFÖRDERZEUGS**

(30) Priorität: 07.08.2019 DE 102019121335
(71) Anmelder: Linde Material Handling GmbH, 63743 Aschaffenburg (DE)
(72) Erfinder: HANKE, Mark, 63739 Aschaffenburg (DE)
(74) Vertreter: Patentship Patentanwaltsgesellschaft mbH

(57) **Zusammenfassung**

Die Erfindung betrifft ein Verfahren zur Ermittlung der Eigenbewegung eines Flurförderzeugs (1), das mindestens zwei Abstandssensoren (20a, 20b) am Flurförderzeug (1) aufweist, mit denen eine Überwachungszone (21) auf Objekte (OS, OD) überwacht wird. Von den Abstandssensoren (20a, 20b) werden jeweils statische Sensorsignale, die von statischen Objekten (OS) in der Überwachungszone (21) erzeugt werden, von dynamischen Sensorsignalen, die von dynamischen Objekten (OD) in der Überwachungszone (21) erzeugt werden, separiert und es wird aus den statischen Sensorsignalen jeweils die Eigenbewegung des Abstandssensors (20a; 20b) ermittelt.

## Beschreibung

Die Erfindung betrifft ein Verfahren zur Ermittlung der Eigenbewegung eines Flurförderzeugs, das mindestens zwei Abstandssensoren am Flurförderzeug aufweist, mit denen eine Überwachungszone auf Objekte überwacht wird.

Bei Flurförderzeugen sind Assistenzsysteme bekannt, die mit Abstandssensoren eine Heckraumüberwachung ermöglichen und eine Losfahrverhinderung des Flurförderzeugs durchführen. Diese Assistenzsysteme überwachen hierzu mit Abstandssensoren eine von dem Heckraum des Flurförderzeugs und gegebenenfalls den angrenzenden Seitenbereichen des Flurförderzeugs gebildete Überwachungszone auf Objekte, beispielsweise auf in der Überwachungszone befindliche Personen als sich bewegende, dynamische Objekte. Befindet sich das Flurförderzeug im Stillstand und wird in der Überwachungszone ein sich bewegendes Objekt, beispielsweise eine Person erkannt, gibt das Assistenzsystem ein Warnsignal aus, um die Person in der Überwachungszone und/oder den Fahrer des Flurförderzeugs zu warnen. Zusätzlich oder alternativ kann das Assistenzsystem durch einen Eingriff in eine Fahrsteuerung des Flurförderzeugs ein Anfahren des Flurförderzeugs in die Überwachungszone hinein, d.h. ein Rückwärtsfahren, verhindern. Sobald sich das Flurförderzeug in Bewegung versetzt hat, wird die Überwachung der Umgebungszone auf Objekte mit den Abstandssensoren abgeschaltet, um unnötige Warnhinweise und/oder Eingriffe in die Fahrsteuerung des Flurförderzeugs aufgrund erfasster statischer Objekte zu vermeiden. Ein derartiges als Losfahrverhinderung ausgebildetes Assistenzsystem eines Flurförderzeugs, bei dem im Fahrzeugstillstand der Umgebungsbereich auf Objekte, beispielsweise sich bewegende Personen überwacht wird, und ein Anfahren des Flurförderzeugs in die Überwachungszone hinein verhindert wird, wenn ein Objekt in der Überwachungszone mittels der Abstandssensoren erkannt wird, ist aus der DE 10 2012 106 988 A1 bekannt. Es hat sich gezeigt, dass derartige als Losfahrverhinderung ausgebildete Assistenzsysteme von Flurförderzeugen, bei denen die Abstandssensoren nur im Fahrzeugstillstand aktiv sind und die Überwachungszone auf Objekte überwachen, jedoch die Abstandssensoren abgeschaltet werden, sobald sich das Flurförderzeug in Bewegung gesetzt hat und somit angefahren ist, beim Reversieren des Flurförderzeugs, d.h. einem schnellen Wechsel zwischen Vorwärtsfahrt und Rückwärtsfahrt, wobei sich das Flurförderzeug nur eine sehr kurze Zeitspanne im Fahrzeugstillstand mit einer Fahrgeschwindigkeit Null befindet, Probleme mit der Erfassung von sich bewegenden, dynamischen Objekten in der Überwachungszone aufweisen, da die Abstandssensoren nur diejenige kurze Zeitspanne aktiv geschaltet sind und die Überwachungszone auf Objekte überwachen, in der das Flurförderzeug im Stillstand steht und somit die Geschwindigkeit Null hat.

Derartige als Losfahrverhinderung des Flurförderzeugs ausgebildete Assistenzsysteme benötigen als Eingangssignal und somit als Eingangsgröße die Fahrzeugbewegung des Flurförderzeugs, um den Fahrzeugstillstand ermitteln zu können. Flurförderzeuge weisen jedoch im Gegensatz zu Kraftfahrzeugen, die an jedem Rad einen Drehzahlsensor aufweisen, keine entsprechenden Rad-Drehzahlsensoren auf, aus denen die Eigenbewegung des Flurförderzeugs ermittelt werden könnte. Bekannt ist es, bei Flurförderzeugen die Eigenbewegung des Flurförderzeugs zu ermitteln, indem die Geschwindigkeit des Flurförderzeugs über das Ansteuersignal des Fahrantriebs, beispielsweise den Sollwert des Pumpenschwenkwinkels einer Hydraulikpumpe eines hydrostatischen Fahrantriebs, geschätzt wird und zusätzlich ein Lenkwinkelsensor verwendet wird, der den Lenkwinkel eines gelenkten Rades ermittelt. Dies führt jedoch zu einer relativ ungenauen Bestimmung der Eigenbewegung des Flurförderzeugs, da der Lenkwinkelsensor aufgrund der großen Lenkwinkel relativ ungenau arbeitet und die Räder aufgrund von Lenkfehlern viel radieren. Sofern das Assistenzsystem bei neuen Flurförderzeugen werkseitig vom Hersteller des Flurförderzeugs eingebaut wird, können die Ansteuersignale der Hydraulikpumpe des hydrostatischen Fahrantriebs und die Signale des Lenkwinkelsensors beispielsweise direkt aus einer elektronischen Fahrzeugsteuerung ausgelesen werden.

Sofern das als Losfahrverhinderung des Flurförderzeugs ausgebildete Assistenzsystem an einem Flurförderzeug, beispielsweise einem Flurförderzeug eines fremden Herstellers, nachgerüstet werden soll, ergibt sich jedoch das Problem, dass überhaupt keine Kenntnis über die Eigenbewegung des Flurförderzeugs vorliegt, da entweder keine Sensoreinrichtung im Flurförderzeug vorhanden ist, die ein geeignetes Signal ermittelt, mit der der Stillstand des Flurförderzeugs erfasst werden kann, oder an der elektronischen Fahrzeugsteuerung des Flurförderzeugs keine Schnittstelle vorhanden ist, um ein entsprechendes Signal einer bereits vorhandenen Sensoreinrichtung auszulesen.

Der vorliegenden Erfindung liegt die Aufgabe zugrunde, ein Verfahren der eingangs genannten Gattung zur Verfügung zu stellen, das auf einfache Weise eine Ermittlung der Eigenbewegung des Flurförderzeugs ermöglicht.

Diese Aufgabe wird erfindungsgemäß dadurch gelöst, dass von den Abstandssensoren jeweils statische Sensorsignale, die von statischen Objekten in der Überwachungszone erzeugt werden, von dynamischen Sensorsignalen, die von dynamischen Objekten in der Überwachungszone erzeugt werden, separiert werden und aus den statischen Sensorsignalen jeweils die Eigenbewegung des Abstandssensors ermittelt wird. Mit dem erfindungsgemäßen Verfahren wird es ermöglicht, aus den Sensorsignalen der Abstandsensoren, die vorgesehen sind, um den Umgebungsbereich auf Objekte zu überwachen, auch die Eigenbewegung des Abstandssensors und daraus die Eigenbewegung des Flurförderzeugs zu bestimmen. Die statischen Sensorsignale der Abstandssensoren, die von statischen Objekten in der Überwachungszone erzeugt werden, werden verwendet, um die Eigenbewegung der Abstandssensoren und damit die Eigenbewegung des Flurförderzeugs zu bestimmen. Mit den dynamischen Sensorsignalen der Abstandssensoren, die von dynamischen Objekten in der Überwachungszone erzeugt werden, können dynamische Objekte, beispielsweise sich bewegende Personen, in der Überwachungszone detektiert werden. Es wird somit mit den Abstandssensoren nicht nur die Überwachungszone auf Objekte überwacht, sondern anhand der Sensorsignale dieser Abstandssensoren auch die Eigenbewegung des Flurförderzeugs in einfacher Weise bestimmt. Es sind somit für die Bestimmung der Eigenbewegung des Flurförderzeugs keine zusätzlichen Ansteuersignale oder Sensorsignale von weiteren Sensoren erforderlich, so dass das erfindungsgemäße Verfahren auch bei Fremdgeräten in einfacher Weise einsetzbar ist, um die Eigenbewegung des Flurförderzeugs ermitteln zu können.

Gemäß einer vorteilhaften Ausgestaltungsform der Erfindung wird aus dem zeitlichen Verlauf der statischen Sensorsignale ein Geschwindigkeitsvektor des jeweiligen Abstandssensors ermittelt. Der Geschwindigkeitsvektor (Betrag und Richtung) des jeweiligen Abstandssensors kann aus dem zeitlichen Verlauf der statischen Sensorsignale, die von statischen Objekten in der Überwachungszone erzeugt werden, auf einfache Weise bestimmt werden.

Gemäß einer vorteilhaften Ausgestaltungsform der Erfindung wird aus den statischen Sensorsignalen der beiden Abstandssensoren und/oder aus der Eigenbewegung der Abstandssensoren die Fahrzeugbewegung des Flurförderzeugs ermittelt. Da bei dem erfindungsgemäßen Verfahren mindestens zwei Radarsensoren verwendet werden, können die Sensorsignale, d.h. die Geschwindigkeitsvektoren, der beiden Abstandssensoren auf eine Fahrzeugbewegung des Flurförderzeugs umgerechnet werden und somit die Fahrzeugbewegung, d.h. die Eigenbewegung, des Flurförderzeugs bestimmt werden. Dies kann in einer übergeordneten elektronischen Steuereinrichtung erfolgen. Als Fahrzeugbewegung kann hierbei der Momentanpol der Drehung, die Drehrate und die Geschwindigkeit des Flurförderzeugs bestimmt werden. Hierzu sind in der elektronischen Steuereinrichtung lediglich als weitere Größen die Position und Orientierung der fest am Flurförderzeug angeordneten Abstandsensoren am Flurförderzeug erforderlich. Da dies bekannte und konstante Größe sind, können diese einfach in die elektronische Steuereinrichtung abgespeichert bzw. bei der Bestimmung der Eigenbewegung des Flurförderzeugs berücksichtigt werden.

Bevorzugt wird als Überwachungszone von den Abstandssensoren ein Heckbereich des Flurförderzeugs überwacht.

Gemäß einer Weiterbildung der Erfindung wird bei einem mittels der statischen Sensorsignale der Abstandsensoren ermittelten Fahrzeugstillstand des Flurförderzeugs ein Anfahren des Flurförderzeugs in die Überwachungszone verhindert, wenn mittels der dynamischen Sensorsignale der Abstandssensoren ein sich bewegendes Objekt in der Überwachungszone erkannt wird. Mit den Abstandssensoren kann für ein als Losfahrverhinderung des Flurförderzeugs ausgebildetes Assistenzsystem anhand der statischen Sensorsignale der Abstandssensoren die Eigenbewegung und somit ein Fahrzeugstillstand des Flurförderzeugs auf einfache Weise bestimmt werden und mittels der dynamischen Sensorsignale der Abstandssensoren ein sich bewegendes Objekt, beispielsweise eine Person, in der Überwachungszone detektiert werden, um eine Losfahrverhinderung des Flurförderzeugs aus dem Fahrzeugstillstand in die Überwachungszone hinein umzusetzen. Da die Abstandssensoren bei dem erfindungsgemäßen Verfahren nicht nur im Fahrzeugstillstand sondern auch bei fahrendem Flurförderzeug aktiv sind, kann somit auch bei einem Reversieren des Flurförderzeugs eine Losfahrverhinderung in sicherer Weise erzielt werden, wenn sich eine Person in der Überwachungszone befindet.

Gemäß einer Weiterbildung der Erfindung wird bei einem mittels der statischen Sensorsignale der Abstandsensoren ermittelten Fahrzeugbewegung in die Überwachungszone hinein ein Abbremsen und/oder eine Begrenzung der Fahrgeschwindigkeit des Flurförderzeugs durchgeführt, wenn mittels der dynamischen Sensorsignalen der Abstandssensoren ein sich bewegendes Objekt in der Überwachungszone erkannt wird und/oder wenn mittels der statischen Sensorsignale der Abstandssensoren ein statisches Objekt in der Überwachungszone erkannt wird. Bei dem erfindungsgemäßen Verfahren sind die Abstandssensoren nicht nur im Fahrzeugstillstand, sondern auch bei fahrendem Flurförderzeug aktiv. Mit den Abstandssensoren kann für ein als Rückraumüberwachung des Flurförderzeugs ausgebildetes Assistenzsystem anhand der statischen Sensorsignale der Abstandssensoren die Eigenbewegung und somit eine Fahrzeugbewegung des Flurförderzeugs in die Überwachungszone hinein auf einfache Weise bestimmt werden und mittels der dynamischen Sensorsignale der Abstandssensoren ein sich bewegendes Objekt, beispielsweise eine Person, in der Überwachungszone detektiert wird und/oder mittels der statischen Sensorsignale der Abstandssensoren ein statisches Objekt, beispielsweise eine Hallenstütze oder eine Regalstütze, in der Überwachungszone detektiert wird, um eine Rückraumüberwachung des Flurförderzeugs umzusetzen, bei dem ein Abbremsen und/oder eine Begrenzung der Fahrgeschwindigkeit des Flurförderzeugs erfolgt, wenn das Flurförderzeug in Richtung der Überwachungszone fährt und sich in der Überwachungszone ein sich bewegendes Objekt, beispielsweise eine Person, und/oder ein statisches Objekt, beispielsweise eine Hallenstütze, befindet, um durch das Abbremsen und/oder die Begrenzung der Fahrgeschwindigkeit des Flurförderzeugs eine Kollision des Flurförderzeugs mit dem sich bewegenden Objekt oder dem statischen Objekt zu vermeiden.

Die Abstandssensoren sind mit einer im Wesentlichen horizontalen Orientierung an dem Flurförderzeug angeordnet. Die Abstandssensoren sind somit im Wesentlichen parallel zu einer Fahrbahn angeordnet, so dass die Abstandsensoren statische und dynamische Objekte in der Überwachungszone sicher erfassen können.

Die Abstandssensoren können als Laserscanner, beispielsweise 2D-Laserscanner, ausgebildet sein.

Gemäß einer vorteilhaften Ausgestaltungsform der Erfindung sind die Abstandssensoren als Radarsensoren ausgebildet. Radarsensoren weisen gegenüber Laserscannern den Vorteil auf, dass Radarsensoren unempfindlich gegen Verschmutzung und Sonnenlicht sind und einen Raum überwachen können, wohingegen ein 2D-Laserscanner nur eine Ebene überwacht.

Gemäß einer Weiterbildung der Erfindung wird zur Erhöhung der Genauigkeit der Ermittlung der Eigenbewegung des Flurförderzeugs weiterhin mindestens ein fahrzeugeigener Sensor berücksichtigt, insbesondere ein Lenkwinkelsensor, der den Lenkwinkel von gelenkten Räder des Flurförderzeugs erfasst, und/oder ein Drehzahlgeber an Rädern des Flurförderzeugs und/oder Sensoren eines Beschleunigungsclusters, die drei Drehraten und drei Längsbeschleunigungen des Flurförderzeugs messen. Mit einer derartigen Sensorfusion der beiden Abstandssensoren mit weiteren fahrzeugeigenen Sensoren, beispielsweise einem Lenkwinkelsensor, der den Lenkwinkel der gelenkte Räder erfasst, und/oder einem Drehzahlgeber an den Rädern und/oder mit Sensoren eines Beschleunigungsclusters, die drei Drehraten und drei Längsbeschleunigungen des Flurförderzeugs messen, kann die Genauigkeit der Bewegungsschätzung der Eigenbewegung des Flurförderzeugs mit den Abstandssensoren auf einfache Weise weiter verbessert werden.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug, dessen Eigenbewegung mit einem erfindungsgemäßen Verfahren ermittelt wird, in einer schematischen Darstellung und
- Figur 2: eine Heckansicht des Flurförderzeugs der Figur 1.

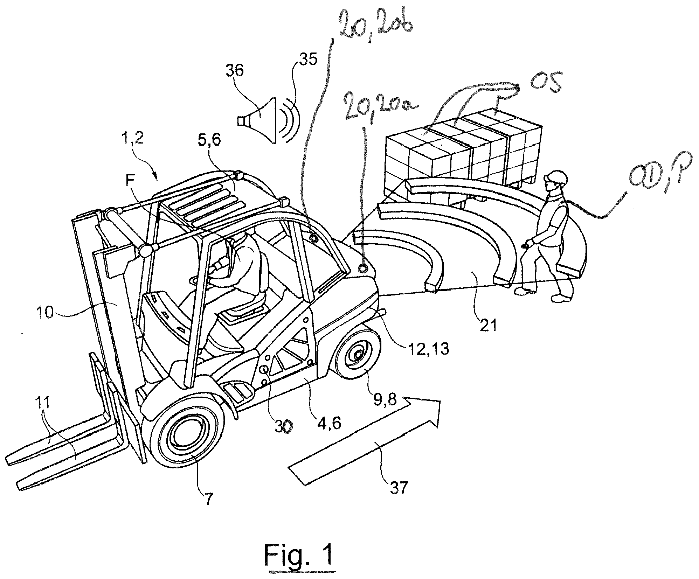

In der Figur 1 ist ein Flurförderzeug 1, beispielsweise ein Gegengewichtsgabelstapler 2, dargestellt.

Das Flurförderzeug 1 weist einen von einem Fahrzeugrahmen 4 und einem Fahrerschutzdach 5 gebildeten Fahrzeugkörper 6 auf. Unterhalb des Fahrerschutzdaches 5, das beispielsweise von einer Fahrerkabine gebildet sein kann, ist ein Aggregateraum ausgebildet, in dem bei einem Flurförderzeug 2 mit einem batterie-elektrischen Antriebssystem eine Traktionsbatterie und bei einem Flurförderzeug 2 mit einem verbrennungsmotorischen Antriebssystem ein Verbrennungsmotor angeordnet ist.

Im frontseitigen, lastzugewandten Bereich ist das Flurförderzeug 1 mit zwei Antriebsrädern 7 und im heckseitigen, lastabgewandten Bereich mit einer Lenkachse 8 mit gelenkten Rädern 9 versehen. Am vorderen, lastzugewandten Bereich des Flurförderzeugs 1 ist ein Hubgerüst 10 angeordnet, an dem ein beispielsweise als Lastgabel ausgebildetes Lastaufnahmemittel 11 auf- und abbewegbar angeordnet ist.

Im heckseitigen, lastabgewandten Bereich ist das Flurförderzeug 1 mit einem fahrzeugheckseitigen Bauteil 12 versehen. Das fahrzeugheckseitige Bauteil 12 ist bei der Ausführung des Flurförderzeugs 1 als Gegengewichtsgabelstapler 2 als Gegengewicht 13 ausgebildet.

Das Flurförderzeug 1 weist eine Sensoreinrichtung 20 mit mindestens zwei Abstandssensoren 20a, 20b, mit denen eine Überwachungszone 21 an dem Flurförderzeug 1 auf Objekte OS, OD, beispielsweise in der Überwachungszone 21 befindliche Personen P, überwacht wird. Die Abstandssensoren 20a, 20b, mit denen die Überwachungszone 21 an dem Flurförderzeug 1 auf Objekte OS, OD überwacht wird, sind im dargestellten Ausführungsbeispiel am Fahrzeugheck des Flurförderzeugs 1 angeordnet, beispielsweise an oder in dem fahrzeugheckseitige Bauteil 12, und die Überwachungszone 21 von dem Heckbereich des Flurförderzeugs 1 und gegebenenfalls zusätzlich von den angrenzenden Seitenbereiche des Flurförderzeugs 1 gebildet ist.

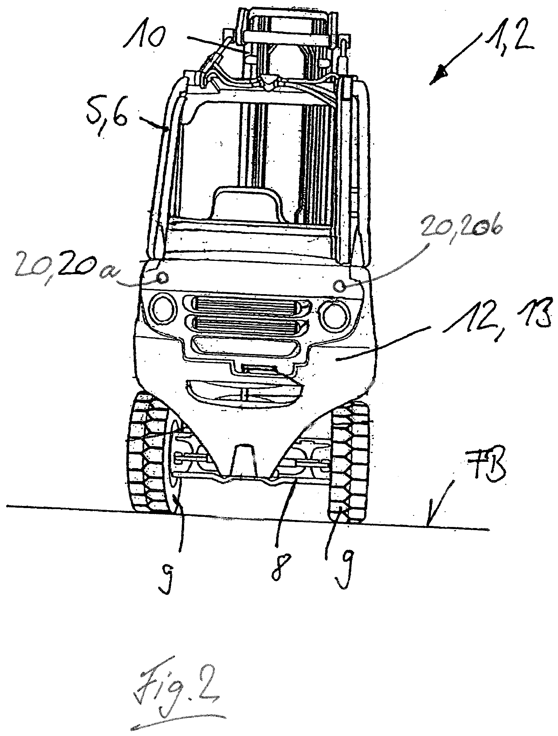

Die Abstandssensoren 20a, 20b ermöglichen somit eine Heckraumüberwachung. Die Abstandssensoren 20a, 20b sind im Wesentlichen horizontal ausgerichtet an dem Flurförderzeug 1 angeordnet. Die Abstandssensoren 20a, 20b sind somit im Wesentlichen parallel zu einer Fahrbahn FB angeordnet. Wie aus der Figur 2 ersichtlich ist, sind die Abstandssensoren 20a, 20b in Fahrzeugquerrichtung voneinander beabstandet angeordnet. Die Abstandssensoren 20a, 20b sind bevorzugt als Radarsensoren ausgebildet.

Bei den mittels der Abstandssensoren 20a, 20b erfassten Objekten OS, OD in der Überwachungszone 21 kann es sich um statische Objekte OS handeln oder um dynamische Objekte OD. Statische Objekte OS sind stationäre Objekte, beispielsweise Stützen einer Halle, feststehende Regalstützen einer Regalanlage oder in einer Halle abgestellte Paletten, die in der Figur 1 als statische Objekte OS dargestellt sind. Dynamische Objekte OD sind sich bewegende Objekte, beispielsweise eine sich bewegende Bedienperson P, die in der Figur 1 als dynamisches Objekt OD dargestellt ist, oder ein sich bewegendes weiteres Flurförderzeug.

Mit dem erfindungsgemäßen Verfahren kann aus den Sensorsignalen der beiden Abstandssensoren 20a, 20b die Fahrzeugbewegung und somit die Eigenbewegung des Flurförderzeugs 1 ermittelt werden. Hierzu separieren die Abstandssensoren 20a, 20b während der Fahrt des Flurförderzeugs 1 die statischen Signale, die von statischen Objekte OS erzeugt werden, von den dynamischen Signalen, die von den dynamischen Objekten OD erzeugt werden. Aus dem zeitlichen Verlauf der statischen Signale der Abstandssensoren 20a, 20b wird auf den Geschwindigkeitsvektor (Betrag und Richtung) des jeweiligen Abstandssensors 20a, 20b geschlossen. Da mindestens zwei Abstandssensoren 20a, 20b verwendet werden, kann eine übergeordnete Steuerungseinrichtung 30 die statischen Signale der beiden Abstandssensoren 20a, 20b auf die Fahrzeugbewegung des Flurförderzeugs 1 umrechnen und den Momentanpol einer Drehung, die Drehrate und die Geschwindigkeit des Flurförderzeugs 1 ermitteln. Der übergeordneten Steuerungseinrichtung 30 sind hierzu die Position und Orientierung der beiden Abstandssensoren 20a, 20b an dem Flurförderzeug bekannt. Daraus kann die Eigenbewegung des Flurförderzeugs 1 ermittelt werden.

Da von den beiden Abstandssensoren 20a, 20b mit den dynamischen Signalen weiterhin die dynamischen Objekte OD in der Überwachungszone 21 um das Flurförderzeug 1 detektiert werden, kann eine Kollisionsprädiktion erfolgen und das Flurförderzeug 1 rechtzeitig abgebremst werden, bevor es zu einer Kollision mit einem dynamischen Objekt OD kommen kann.

Das erfindungsgemäße Verfahren kann im Stillstand und bis zur maximalen Geschwindigkeit des Flurförderzeugs 1 aktiv sein. Die Abstandssensoren 20a, 20b sind somit im Fahrzeugstillstand und bei fahrendem Flurförderzeug 1 aktiv.

Das erfindungsgemäße Verfahren bietet somit als Funktion, dass aus den Sensorsignalen der beiden Abstandssensoren 20a, 20b, die zur Überwachung der Überwachungszone 21 auf Objekte OS, OD vorgesehen sind, auch die Eigenbewegung des Flurförderzeugs 1 bestimmt werden kann.

Diese Funktion, aus den Signalen der Abstandssensoren 20a, 20b die Eigenbewegung des Flurförderzeugs 1 zu bestimmen, kann in Verbindung mit einem als Losfahrverhinderung des Flurförderzeugs 1 ausgebildeten Assistenzsystem und/oder einem als Rückraumüberwachung des Flurförderzeugs 1 ausgebildeten Assistenzsystem eingesetzt werden. Die mit der Funktion, die Eigenbewegung des Flurförderzeug zu bestimmen, versehenen Abstandssensoren 20a, 20b können somit auf einfache Weise eine Losfahrverhinderung des Flurförderzeugs 1 aus dem Stillstand realisieren. Die mit der Funktion, die Eigenbewegung des Flurförderzeug zu bestimmen, versehenen Abstandssensoren 20a, 20b sind weiterhin während der Fahrt eines Flurförderzeugs 1 aktiv, wodurch mit den Abstandssensoren 20a, 20b auf einfache Weise eine Rückraumüberwachung des fahrenden Flurförderzeugs 1 realisierbar ist.

Ein als Losfahrverhinderung des Flurförderzeugs 1 ausgebildetes Assistenzsystem erfasst mit dem erfindungsgemäßen Verfahren aus den Sensorsignalen der beiden Abstandssensoren 20a, 20b als Eigenbewegung des Flurförderzeugs 1 den Fahrzeugstillstand des Flurförderzeugs 1 und verhindert das Anfahren des stehenden Flurförderzeugs 1 in die Überwachungszone 21 hinein (Pfeil 37 in der Figur 1), wenn mit den Abstandssensoren 20a, 20b in der Überwachungszone ein dynamisches Objekt OD, beispielsweise eine Person P, ermittelt wird. Alternativ oder zusätzlich kann hierbei mit einer Warneinrichtung 36, beispielsweise einer Hupe, ein Warnsignal 35 ausgegeben werden. Mit dem Warnsignal 35 kann die in der Überwachungszone 21 befindliche Person P und/oder ein Fahrer F des Flurförderzeugs 1 gewarnt werden.

Ein als Rückraumüberwachung des Flurförderzeugs 1 ausgebildetes Assistenzsystem erfasst mit dem erfindungsgemäßen Verfahren aus den Sensorsignalen der beiden Abstandssensoren 20a, 20b bei fahrendem Flurförderzeug 1 die Eigenbewegung des Flurförderzeugs 1 und bremst das Flurförderzeug 1 aktiv ab und/oder beschränkt die Fahrgeschwindigkeit des Flurförderzeugs 1, wenn beim Fahren in die Überwachungszone 21 hinein (Pfeil 37 in der Figur 1) mit den Abstandssensoren 20a, 20b in der Überwachungszone 21 ein dynamisches Objekt OD, beispielsweise eine Person P, und/oder ein statisches Objekt OS, beispielsweise eine Hallenstütze oder eine Regalstütze, ermittelt wird, so dass eine Kollision des Flurförderzeugs 1 mit dem dynamischen Objekt OD bzw. dem statischen Objekt OS verhindert wird. Alternativ oder zusätzlich kann hierbei mit einer Warneinrichtung 36, beispielsweise einer Hupe, ein Warnsignal 35 ausgegeben werden. Mit dem Warnsignal 35 kann die in der Überwachungszone 21 befindliche Person P und/oder ein Fahrer F des Flurförderzeugs 1 gewarnt werden.

Mit dem erfindungsgemäßen Verfahren kann aus den bereits für die Losfahrverhinderung und/oder für die Rückraumüberwachung am Flurförderzeug 1 angebrachten Abstandssensoren 20a, 20b auf einfache Weise die Fahrzeugbewegung und somit die Eigenbewegung des Flurförderzeugs 1 ermittelt werden. Mit dem erfindungsgemäßen Verfahren kann somit ein Assistenzsystem einer Losfahrverhinderung und/oder ein Assistenzsystem einer Rückraumüberwachung auf einfache Weise an Flurförderzeugen 1, insbesondere an Flurförderzeugen 1 eines fremden Herstellers, erzielt und auch nachgerüstet werden.

In Weiterbildung der Erfindung kann eine Sensorfusion der beiden Abstandssensoren 20a, 20b mit weiteren fahrzeugeigenen Sensoren vorgesehen sein, beispielsweise einem Lenkwinkelsensor, der den Lenkwinkel der gelenkte Räder 9 erfasst, und/oder einem Drehzahlgeber an den Rädern 7, 9. Darüber hinaus kann eine Sensorfusion der beiden Abstandssensoren 20a, 20b mit einem Beschleunigungscluster mit Sensoren, die drei Drehraten und drei Längsbeschleunigungen des Flurförderzeugs messen, beispielsweise MEMS (Micro-Electro-Mechanical)-Sensoren, vorgesehen sein. Mit derartigen Sensorfusionen kann die Genauigkeit der Bewegungsschätzung der Eigenbewegung des Flurförderzeugs 1 mit den Abstandssensoren 20a, 20b weiter verbessert werden.

## Patentansprüche

1. Verfahren zur Ermittlung der Eigenbewegung eines Flurförderzeugs (1), das mindestens zwei Abstandssensoren (20a, 20b) am Flurförderzeug (1) aufweist, mit denen eine Überwachungszone (21) auf Objekte (OS, OD) überwacht wird, **dadurch gekennzeichnet, dass** von den Abstandssensoren (20a, 20b) jeweils statische Sensorsignale, die von statischen Objekten (OS) in der Überwachungszone (21) erzeugt werden, von dynamischen Sensorsignalen, die von dynamischen Objekten (OD) in der Überwachungszone (21) erzeugt werden, separiert werden und aus den statischen Sensorsignalen jeweils die Eigenbewegung des Abstandssensors (20a; 20b) ermittelt wird.

2. Verfahren nach Anspruch 1, **dadurch gekennzeichnet, dass** aus dem zeitlichen Verlauf der statischen Sensorsignale ein Geschwindigkeitsvektor des jeweiligen Abstandssensors (20a, 20b) ermittelt wird.

3. Verfahren nach Anspruch 1 oder 2, **dadurch gekennzeichnet, dass** aus den statischen Sensorsignalen der beiden Abstandssensoren (20a, 20b) und/oder aus der Eigenbewegung der Abstandssensoren (20a, 20b) die Fahrzeugbewegung des Flurförderzeugs (1) ermittelt wird.

4. Verfahren nach einem der Ansprüche 1 bis 3, **dadurch gekennzeichnet, dass** als Überwachungszone (21) von den Abstandssensoren (20a, 20b) ein Heckbereich des Flurförderzeugs (1) überwacht wird.

5. Verfahren nach einem der Ansprüche 1 bis 4, **dadurch gekennzeichnet, dass** bei einem mittels der statischen Sensorsignale der Abstandsensoren (20a, 20b) ermittelten Fahrzeugstillstand des Flurförderzeugs (1) ein Anfahren des Flurförderzeugs (1) in die Überwachungszone (21) verhindert wird, wenn mittels der dynamischen Sensorsignale der Abstandssensoren (20a, 20b) ein sich bewegendes Objekt (OD) in der Überwachungszone (21) erkannt wird.

6. Verfahren nach einem der Ansprüche 1 bis 5, **dadurch gekennzeichnet, dass** bei einem mittels der statischen Sensorsignale der Abstandsensoren (20a, 20b) ermittelten Fahrzeugbewegung des Flurförderzeugs (1) in die Überwachungszone (21) hinein ein Abbremsen und/oder eine Begrenzung der Fahrgeschwindigkeit des Flurförderzeugs (1) durchgeführt wird, wenn mittels der dynamischen Sensorsignalen der Abstandssensoren (20a, 20b) ein sich bewegendes Objekt (OD) in der Überwachungszone (21) erkannt wird und/oder wenn mittels der statischen Sensorsignale der Abstandssensoren (20a, 20b) ein statisches Objekt (OS) in der Überwachungszone (21) erkannt wird.

7. Verfahren nach einem der Ansprüche 1 bis 6, **dadurch gekennzeichnet, dass** die Abstandssensoren (20a, 20b) mit einer im Wesentlichen horizontalen Orientierung an dem Flurförderzeug (1) angeordnet sind.

8. Verfahren nach einem der Ansprüche 1 bis 7, **dadurch gekennzeichnet, dass** die Abstandssensoren (20a, 20b) als Radarsensoren ausgebildet sind.

9. Verfahren nach einem der Ansprüche 1 bis 8, **dadurch gekennzeichnet, dass** zur Erhöhung der Genauigkeit der Ermittlung der Eigenbewegung des Flurförderzeugs (1) weiterhin mindestens ein fahrzeugeigener Sensor berücksichtigt wird, insbesondere ein Lenkwinkelsensor, der den Lenkwinkel von gelenkten Räder (9) des Flurförderzeugs (1) erfasst, und/oder ein Drehzahlgeber an Rädern (7, 9) des Flurförderzeugs (1) und/oder Sensoren eines Beschleunigungsclusters, die drei Drehraten und drei Längsbeschleunigungen des Flurförderzeugs (1) messen.
